# EUROPEAN PATENT SPECIFICATION

(11) **EP 0 630 015 B1**
(45) Date of publication and mention of the grant of the patent: **30.08.2000**
(21) Application number: 94303877.8
(22) Date of filing: 27.05.1994
(51) Int. Cl.: G11B 17/04, G11B 15/675

(54) **Device for inserting/extracting a data carrier into/from a reader**
Vorrichtung zum Einzug/Auswurf eines Datenträgers in/aus eine(r) Wiedergabevorrichtung
Dispositif de chargement/éjection d'un support d'informations dans/d'un lecteur

(30) Priority: 01.06.1993 KR 9309796
(43) Date of publication of application: 21.12.1994
(73) Proprietor: SAMSUNG ELECTRONICS CO., LTD., Suwon-City, Kyungki-do (KR)
(72) Inventor: Lee, Min-su, Suwon-City, Kyungki-do (KR)
(74) Representative: Neill, Alastair William

(56) References cited:
- EP-A- 0 437 091
- EP-A- 0 547 944
- EP-A- 0 592 192
- DE-A- 2 719 298
- US-A- 4 887 174

## Description

The invention relates to a device for extracting an inserted data carrier from a reader and particularly, but not exclusively, to a device for extracting an inserted disk cartridge for a recording/playback disk player.

The development of magnetooptical disk cartridges of a 64mm diameter (commercially referred to as "minidisks") has been under way since the minidisk was first introduced.

A portable player for recording and playback operations with the minidisk, is on the market. This player has a slot into which a minidisk is insertable. A minidisk cartridge is loaded into the deck by the driving force of a motor, with a shutter of the cartridge being moved aside to open a communicating aperture. The cartridge is thereafter mounted on a turntable and rotated by a spindle motor during playback/recording operations.

Furthermore, reference is made to EP-A-0 437091 disclosing a disc player with a disc extracting device having the precharacterising features of appended claim 1.

In general, it is desirable that a portable player should be as light and small as possible, allow the rapid insertion/extraction of a disk cartridge, and have a very low power consumption. However, due to the specific construction of the insertion means, i.e., via a slot, the Sony minidisk player has a complicated structure for insertion/extraction of cartridges. Furthermore, due to limitations which are imposed on the player by providing it with a motorized loading mechanism, it is difficult to miniaturize and reduce the weight of the player and to speed up the inserting and extracting operations thereof. A further disadvantage is that utilising a motorized loading mechanism to insert and/or extract the minidisk increases the player's overall power consumption. Accordingly, battery power cannot be efficiently utilized.

Therefore, it is an aim of preferred embodiments of the invention to provide a device for inserting and extracting a disk cartridge for a disk player in which insertion and extraction of the disk cartridge are performed by the engagement of meters without the use of a motor, so as to reduce the number of device components and, by removing the need for a motor to load disks, achieve a means of rapid insertion/extraction of the disk cartridge, a reduction in power consumption, and lower production costs.

According to the present invention, there is provided a device for extracting an inserted data carrier from a reader, the device comprising:
a data carrier holder, one end of which is pivotally connected to a deck of the reader via a first pivotal attachment having an associated first pivotal axis;
locking means associated with the carrier holder for performing a locking/release function;
locking release means having first and second ends, the first end being pivotally connected to the deck by a second pivotal attachment, wherein said second pivotal attachment has a second pivotal axis which is displaced from said first pivotal axis such that the second end is capable of interlocking engagement with the carrier holder to perform said release function; and
extraction means pivotally connected to the carrier holder, the extraction means being lockable by said locking means and comprising at least a first portion.
characterised in that the extraction means consists of a single extraction member which has a first end which directly engages with said locking means and a second end which is adapted to extract an inserted data carrier from the reader when released by said locking means.

The locking means preferably comprises:
a stop for blocking one end of said extraction means;
a locking member having a locking release piece for releasing the device from the locked state, the release piece being provided between said first end of the extraction means and said stop when the device is in said locked stated; and
a first spring installed between said locking member and said carrier holder for resiliently biasing said locking member towards an insertion direction of the data carrier.

The locking release means may comprise:
a locking release member one end of which is pivotally connected to said deck; and
a second spring provided between said locking release member and said carrier holder or deck, and for resiliently biasing said locking release member towards said holder.

The extraction means preferably comprises:
an extraction member resiliently biased towards an extraction direction of said carrier by a third spring connected to said carrier holder;
a projection formed on one end of said extraction member and lockably engageable with said locking means;
a raised portion formed on said extraction member for enabling said locking release means to be raised when said extraction member is to be released; and
an extracting piece formed on the other end of said extraction member and bent towards an interior region of said carrier holder for engagement with said data carrier during an extraction operation.

The locking release means may be adapted to automatically release said locking means when said data carrier holder is moved to a data carrier insertion/ extraction position and to automatically lock said locking means into a locked position following the insertion of a data carrier into the data carrier holder and subsequent to movement of the data carrier holder from the insertion/extraction position towards a reading position.

For a better understanding of the invention, and to show how embodiments of the same may be carried into effect, reference will now be made, by way of example, to the accompanying diagrammatic drawings, in which:
Figure 1 is a perspective view of an embodiment of a device for inserting and extracting a disk cartridge into/from a disk player;
Figure 2 is a plan view showing the device of Figure 1 in a state in which a cartridge holder of the device is open and a disk cartridge is inserted therein;
Figure 3 is a side sectional view of the device in the state shown in Figure 2;
Figure 4 is a plan view of the device of Figures 1 to 3 showing the device in a state in which a disk cartridge may be removed therefrom;
Figure 5 is a side sectional view of the device showing the device in a state in which the cartridge holder is open; and
Figure 6 is a side sectional view of the device, similar to that shown in Figure 5, and illustrating the manner in which a disk cartridge may be inserted into the open cartridge holder.

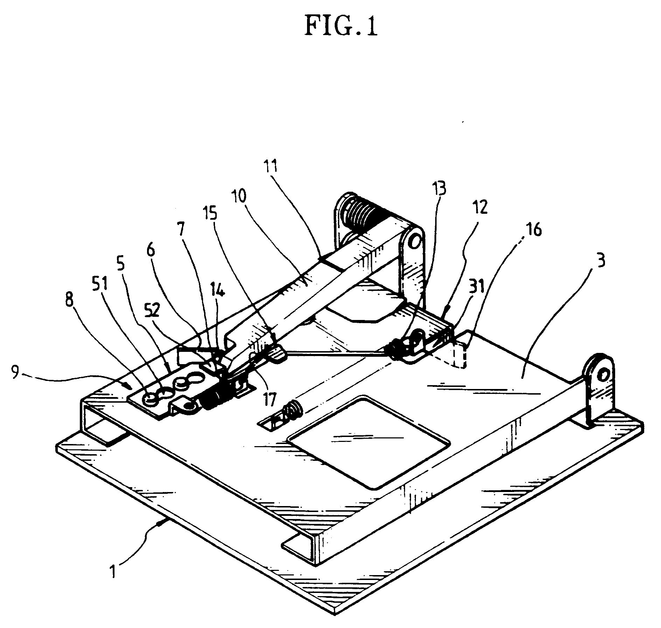

Referring to Figures 1, 2 and 3, a particular embodiment of the device is shown. The device as shown comprises a cartridge holder 3 into which a disk cartridge 2 is insertable, the holder 3 being hinged to a deck 1 of the player such that the cartridge holder is capable of pivotal movement with respect to the deck 1. A locking member 5 having a stop 6 on one side thereof is provided installed on the cartridge holder 3 so as to be capable of movement in a rectilinear manner under the influence of a guiding device 9 and is resiliently biased by a first spring 7 arranged generally parallel to an insertion direction of disk cartridge 2. The guiding device 9 is constructed to have a guide pin 8 placed on the cartridge holder 3, and a long guide hole 51 for allowing the guide pin 8 to be slidably connected to the locking member 5. Stop 6 is provided with an angled surface so as to facilitate locking engagement of the member 5 with a projection 14 formed on an extraction member 12.

A locking release member 10 is provided which is pivotally attached to the deck 1 and has a pivotal axis which is above that of the cartridge holder 3 and parallel therewith. The locking release member 10 is resiliently biased towards cartridge holder 3 by a second spring 11 placed at the rotation center of the locking release member 10.

Extraction member 12 is rotatably mounted on the cartridge holder 3. The extraction member is biased by a third spring 13, placed between extraction member 12 and cartridge holder 3, towards an extraction direction of disk cartridge 2.

The extraction member 12 comprises a projection 14, which projection is blockably engageable by stop 6 of locking member 5, a raised portion 15 having a sloping portion 17 for raising the locking release member 10 and separating it from locking member 5 when a disk cartridge 2 is to be extracted, and an extracting piece 16 which is constructed so as to cooperate with a guide recess 31 so as to push out and thereby extract a disk cartridge during an extraction operation.

The device operates in accordance with the following description.

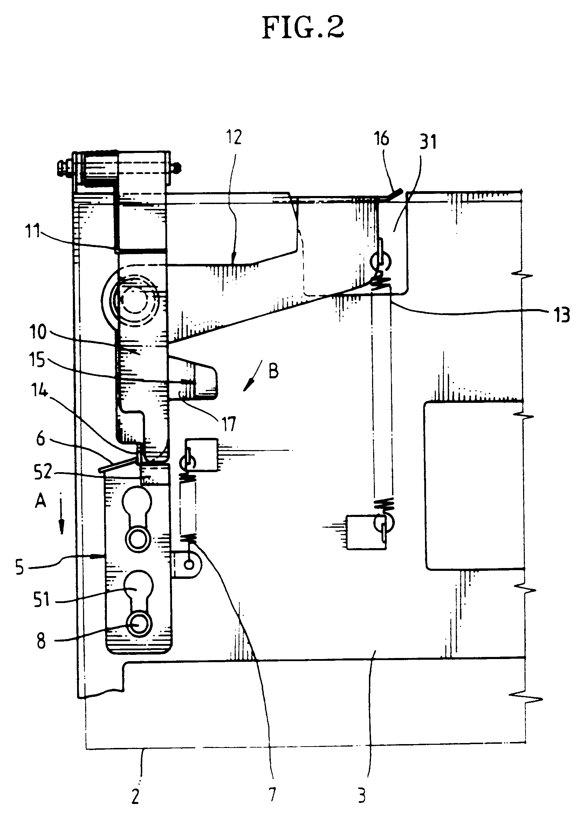

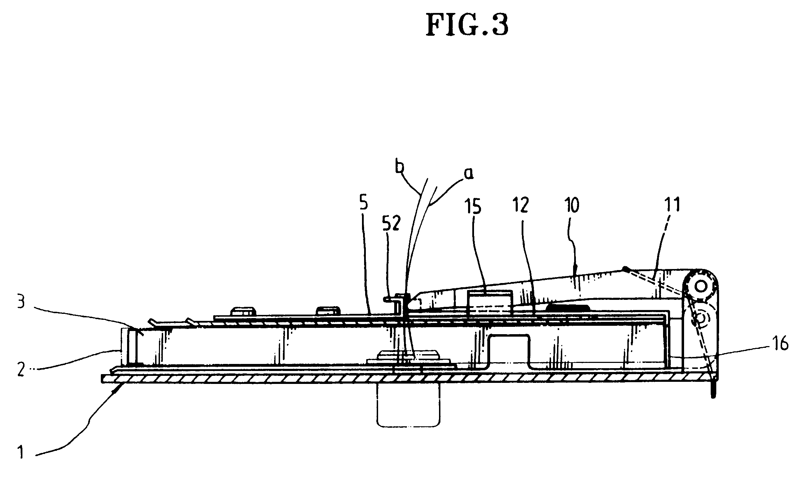

First, as shown in Figures 2 and 3, when cartridge holder 3 with a disk cartridge 2 inserted therein is mounted on deck 1, projection 14 of extraction member 12 is locked by stop 6 of locking member 5. In this state, locking release member 10 comes into contact with extraction member 12 so as to push against locking release piece 52 under the action of second spring 11 and by virtue of the difference between rotation locus "a" of the cartridge holder and rotation locus "b" of locking release member 10. The state shown in these Figures illustrate the device in a condition in which the loading of a disk cartridge has been completed and playback operation can be performed.

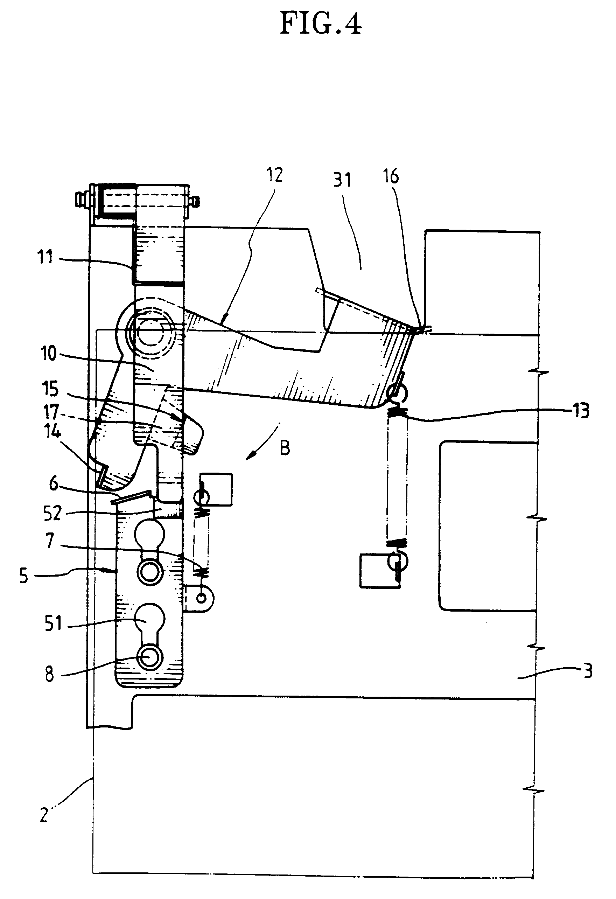

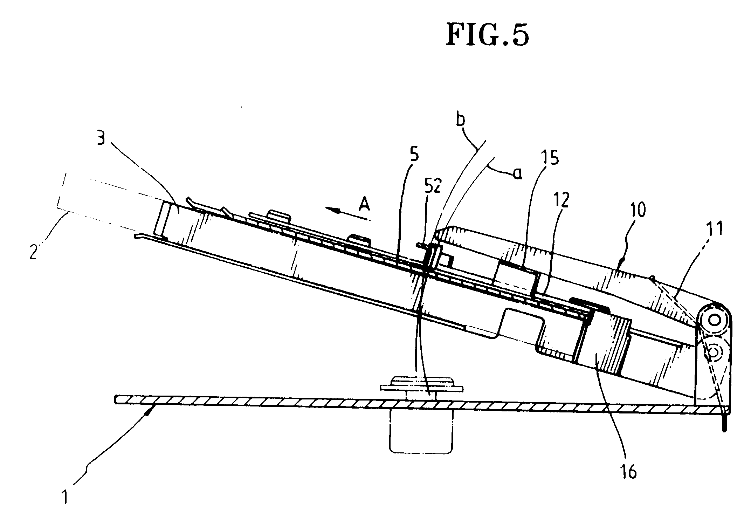

When raised in order to draw out or to load a disk cartridge, cartridge holder 3 rotates on its hinge, so as to become detached from deck 1, as shown in Figure 5. Here, since the rotation center of cartridge holder 3 is positioned below that of locking release member 10, locking release member 10 pushes locking member 5 in the direction shown by arrow "A" by virtue of the difference between rotation locus "a" of cartridge holder 3 and rotation locus "b" of locking release member 10. Therefore, as shown in Figure 4, projection 14, which was held in a locked state by stop 6 of locking member 5, is thereby released. As extraction member 12 is now free to rotate it does so in the direction of arrow "B" under action of the third spring 13 and extracting piece 16 of extraction member 12 acts to draw out the disk cartridge 2 from cartridge holder 3. Here, as shown in Figure 4, the sloping portion 17 of the raised portion 15 acts so as to raise the locking release member 10, and locking member 5 returns to its initial position as shown in Figures 1 to 3 under action of the resilient force of first spring 7, to be locked in place by projection 14 of the extraction member 12.

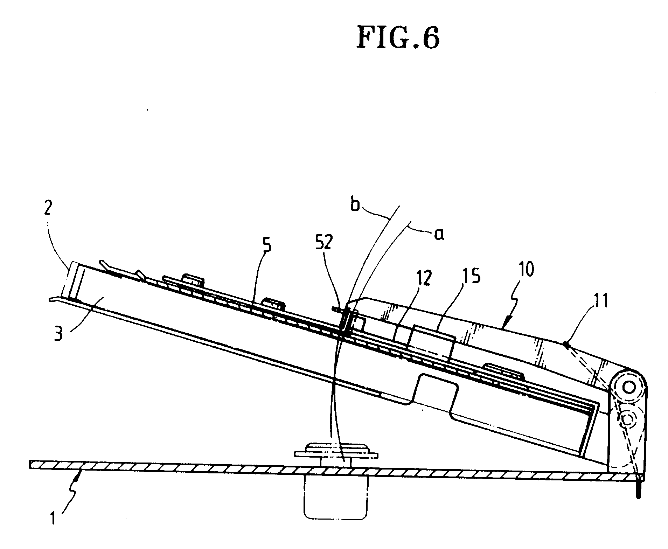

Referring to Figures 4, 5 and 6, in which a state in which cartridge holder 3 is lifted is illustrated, it can be seen that when a disk cartridge 2 is inserted into cartridge holder 3, extracting piece 16 of extraction member 12 is pushed back by the disk cartridge 2, and the extraction member rotates in the opposite direction to that shown by arrow "B". Then, projection 14 of extraction member 12 slides on the slope of stop 6 to depress member 5 against the action of spring 7 until the projection 14 passes an end portion of the stop 6, whereafter the stop 6 springs back into position under spring action to block projection 14. The raised portion 15 of extraction member 12 is, at this point, detached from locking release member 10. Locking release member 10 is held in front of locking member 5 by the resilient force of second spring 11, and is in a position which enables a disk-cartridge extraction operation. As raised portion 15, which supported the locking release member 10, rotates in the opposite direction to that of arrow "B", locking release member 10 is pulled down by the resilient force of second spring 11, to make contact with locking release piece 52 as shown in Figure 6 and extraction member 12 is placed in the locked configuration due to the slanted condition of stop 6 of locking member 5.

When cartridge holder 3 is lowered following the insertion of the disk cartridge, due to the difference between the aforementioned rotation loci ("a" and "b"), locking release member 10 lowers to assume the configuration shown in Figure 3, in which the release member 10 lies atop locking release piece 52 and disk cartridge 2 is mounted on deck 1.

Accordingly, locking release member 10 can be seen to automatically perform a locking release action as cartridge holder 3 is raised or lowered.

As described above, embodiments of devices in accordance with the invention enable the insertion/extraction of cartridges without the need of a motor, by the engagement between a locking member, a locking release member and an extraction member. Therefore, as compared with the conventional apparatus using power transmission members such as a motor and gears, the device enables a reduction in the number of components, thereby simplifying the structure and the assembling process. Furthermore, as devices in accordance with the invention do not employ a costly motor nor gears, production costs may be reduced and benefits by way of more rapid insertion/extraction of disk cartridge may be achieved.

Although the particular embodiment described relates to magnetooptical disk cartridges, it will be evident that the device of the present invention may find application in the loading/extraction of other types of data carrier.

## Claims

1. A device for extracting an inserted data carrier (2) from a reader, the device comprising:
a data carrier holder (3), one end of which is pivotally connected to a deck (1) of the reader via a first pivotal attachment having an associated first pivotal axis;
locking means (5) associated with the carrier holder (3) for performing a locking/release function;
locking release means (10) having first and second ends, the first end being pivotally connected to the deck (1) by a second pivotal attachment, wherein said second pivotal attachment has a second pivotal axis which is displaced from said first pivotal axis such that the second end is capable of interlocking engagement with the carrier holder (3) to perform said release function; and
extraction means (12) pivotally connected to the carrier holder, the extraction means (12) being lockable by said locking means (5)
characterised in that the extraction means consists of a single extraction member (12) which has a first end which directly engages with said locking means (5) and a second end (16) which is adapted to extract an inserted data carrier (2) from the reader when released by said locking means (5).

2. A device according to claim 1, wherein said locking means (5) comprises:
a stop (6) for blocking one end of said extraction means;
a locking member having a locking release piece (52) for releasing the device from the locked state, the release piece (52) being provided between said first end (14) of the extraction means (12) and said stop (6) when the device is in said locked stated; and
a first spring (7) installed between said locking member and said carrier holder (3) for resiliently biasing said locking member (5) towards an insertion direction of the data carrier (2).

3. A device as claimed in any of the preceding claims, wherein said locking release means (10) comprises:
a locking release member one end of which is pivotally connected to said deck; and
a second spring (11) provided between said locking release member (10) and said carrier holder (3) or deck (1), and for resiliently biasing said locking release member (10) towards said holder (13).

4. A device as claimed in any of the preceding claims, wherein said extraction means (12) comprises:
an extraction member (12) resiliently biased towards an extraction direction of said carrier (2) by a third spring (13) connected to said carrier holder (3);
a projection (14) formed on one end of said extraction member (12) and lockably engageable with said locking means (5);
a raised portion (15) formed on said extraction member (12) for enabling said locking release means (10) to be raised when said extraction member (12) is to be released; and
an extracting piece (16) formed on the other end of said extraction member (12) and bent towards an interior region (31) of said carrier holder (3) for engagement with said data carrier (2) during an extraction operation.

5. A device as claimed in any preceding claim:
wherein, the locking release means (10) is adapted to automatically release said locking means (5) when said data carrier holder (3) is moved to a data carrier insertion/ extraction position and to automatically lock said locking means (5) into a locked position following the insertion of a data carrier (2) into the data carrier holder (3) and subsequent movement of the data carrier holder (3) from the insertion/extraction position towards a reading position.

6. A device according to any of the preceding claims, wherein said data carrier (2) is a disk cartridge and said reader is a disk player.

## Patentansprüche

1. Vorrichtung zum Auswerfen eines eingeführten Datenträgers (2) aus einer Leseeinrichtung, wobei die Vorrichtung umfaßt:
einen Datenträgerhalter (3), dessen eines Ende über eine erste Schwenkanbringung schwenkbar mit einem Laufwerk (1) der Leseeinrichtung, zu der eine erste Schwenkachse gehört, verbunden ist;
eine Arretiereinrichtung (5), die zu dem Trägerhalter (3) gehört, um eine Arretier/Löse-Funktion zu erfüllen;
eine Arretierungs-Löseeinrichtung (10) mit einem ersten und einem zweiten Ende, wobei das erste Ende (1) über eine zweite Schwenkanbringung schwenkbar mit dem Laufwerk verbunden ist und die zweite Schwenkanbringung eine zweite Schwenkachse aufweist, die gegenüber der ersten Schwenkachse so verschoben ist, daß das zweite Ende in Eingriff mit dem Trägerhalter (3) kommen kann, um die Lösefunktion auszuüben; und
eine Auswerfeinrichtung (12), die schwenkbar mit dem Trägerhalter verbunden ist, wobei die Auswerfeinrichtung (12) durch die Arretiereinrichtung (5) arretiert werden kann und wenigstens einen ersten Abschnitt umfaßt,
**dadurch gekennzeichnet**, daß die Auswerfeinrichtung aus einem einzelnen Auswerfelement (12) besteht, das ein erstes Ende aufweist, das direkt mit der Arretiereinrichtung (5) in Eingriff ist, sowie ein zweites Ende (16), mit dem ein eingeführter Datenträger (2) aus der Leseeinrichtung ausgeworfen wird, wenn es von der Arretiereinrichtung (5) gelöst wird.

2. Vorrichtung nach Anspruch 1, wobei die Arretiereinrichtung (5) umfaßt:
einen Anschlag (6) zum Blockieren eines Endes der Auswerfeinrichtung;
ein Arretierelement mit einem Arretierungs-Löseteil zum Lösen (52) der Vorrichtung aus dem arretierten Zustand, wobei das Löseteil (52) zwischen dem ersten Ende (14) der Auswerfeinrichtung (12) und dem Anschlag (6) angeordnet ist, wenn sich die Vorrichtung in dem arretierten Zustand befindet; und
eine erste Feder (7), die zwischen dem Arretierelement und dem Trägerhalter (3) installiert ist und das Arretierelement (5) federnd in eine Einziehrichtung des Datenträgers (2) spannt.

3. Vorrichtung nach einem der vorangehenden Ansprüche, wobei die Arretierungs-Löseeinrichtung (10) umfaßt:
ein Arretierungs-Löseelement, dessen eines Ende schwenkbar mit dem Laufwerk verbunden ist; und
eine zweite Feder (11), die zwischen dem Arretierungs-Löseelement (10) und dem Trägerhalter (3) bzw. Laufwerk (1) vorhanden ist und das Arretierungs-Löseelement (10) federnd auf den Halter (13) zu spannt.

4. Vorrichtung nach einem der vorangehenden Ansprüche, wobei die Auswerfeinrichtung (12) umfaßt:
ein Auswerfelement (12) , das von einer dritten Feder (13) , die mit dem Trägerhalter (3) verbunden ist, federnd in eine Auswerfrichtung des Trägers (2) gespannt wird;
einen Vorsprung (14) , der an einem Ende des Auswerfelementes (12) ausgebildet ist und arretierbar mit der Arretiereinrichtung (15) in Eingriff gebracht werden kann,
einen an dem Auswerfelement (12) ausgebildeten erhabenen Abschnitt (15), durch den die Arretierungs-Löseeinrichtung (10) angehoben werden kann, wenn das Auswerfelement (12) gelöst werden soll; und
ein Auswerfteil,(16), das am anderen Ende des Auswerfelements (12) ausgebildet ist und auf einen Innenbereich (31) des Trägerhalters (3) zu gebogen ist, so daß es mit dem Datenträger (2) bei einem Auswerfvorgang in Eingriff kommt.

5. Vorrichtung nach einem der vorangehenden Ansprüche, wobei die Arretierungs-Löseeinrichtung (10) die Arretiereinrichtung (5) automatisch löst, wenn der Datenträgerhalter (3) an eine Datenträger-Einzieh/Auswerf-Position bewegt wird, und die Arretiereinrichtung (5) automatisch in einer arretierten Position arretiert, nachdem ein Datenträger (2) in den Datenträgerhalter (3) eingeführt wurde und sich der Datenträgerhalter (3) anschließend aus der Einführ/Auswerf-Position in eine Leseposition bewegt hat.

6. Vorrichtung nach einem der vorangehenden Ansprüche, wobei es sich bei dem Datenträger (2) um eine Plattenkassette handelt und die Leseeinrichtung ein Plattenabspielgerät ist.

## Revendications

1. Dispositif destiné à extraire d'un lecteur un support de données (2) inséré, ledit dispositif comportant :
un dispositif de maintien de support de données (3), dont une extrémité est reliée à pivotement à une platine (1) du lecteur par l'intermédiaire d'une première fixation à pivotement ayant un premier axe de pivotement associé ;
un moyen de verrouillage (5) associé au dispositif de maintien de support (3) pour exécuter une fonction de verrouillage / libération ;
un moyen de libération de verrouillage (10) ayant des première et seconde extrémités, la première extrémité étant reliée à pivotement à la platine (1) par une seconde fixation à pivotement, ladite seconde fixation à pivotement ayant un second axe de pivotement qui est décalé par rapport audit premier axe de pivotement de telle sorte que la seconde extrémité soit capable de se verrouiller avec le dispositif de maintien de support (3) pour exécuter ladite fonction de libération ; et
un moyen d'extraction (12) relié à pivotement au dispositif de maintien de support, le moyen d'extraction (12) étant apte à être verrouillé par ledit moyen de verrouillage (5) ;
caractérisé en ce que le moyen d'extraction se compose d'un élément d'extraction unique (12) qui une première extrémité qui s'engage directement avec ledit moyen de verrouillage (5), et une seconde extrémité (16) qui est adaptée pour extraire du lecteur un support de données (2) inséré lors de sa libération par ledit moyen de verrouillage (5).

2. Dispositif selon la revendication 1, dans lequel ledit moyen de verrouillage (5) comporte :
une butée (6) pour bloquer une extrémité dudit moyen d'extraction ;
un élément de verrouillage ayant une pièce de libération de verrouillage (52) pour libérer le dispositif de l'état de verrouillage, la pièce de libération (52) étant prévue entre ladite première extrémité (14) du moyen d'extraction (12) et ladite butée (6) lorsque le dispositif se trouve dans ledit état de verrouillage ; et
un premier ressort (7) installé entre ledit élément de verrouillage et ledit dispositif de maintien de support (3) pour solliciter élastiquement ledit élément de verrouillage (5) vers une direction d'insertion du support de données (2).

3. Dispositif selon l'une quelconque des revendications précédentes, dans lequel ledit moyen de libération de verrouillage (10) comporte :
un élément de libération de verrouillage, dont une extrémité est reliée à pivotement à ladite platine ; et
un second ressort (11) prévu entre ledit élément de libération de verrouillage (10) et ledit dispositif de maintien de support (3) ou ladite platine (1), et pour solliciter élastiquement ledit élément de libération de verrouillage (10) vers ledit dispositif de maintien (3).

4. Dispositif selon l'une quelconque des revendications précédentes, dans lequel ledit moyen d'extraction (12) comporte :
un élément d'extraction (12) sollicité élastiquement vers une direction d'extraction dudit support (2) par un troisième ressort (13), relié audit dispositif de maintien de support (3) ;
une saillie (14) formée sur une extrémité dudit élément d'extraction (12) et apte à se verrouiller avec ledit moyen de verrouillage (5) ;
une partie surélevée (15) formée sur ledit élément d'extraction (12) pour permettre de relever ledit moyen de libération de verrouillage (10) lorsque ledit élément d'extraction (12) doit être libéré ; et
une pièce d'extraction (16) formée sur l'autre extrémité dudit élément d'extraction (12) et repliée vers une région intérieure (31) dudit dispositif de maintien de support (3) en vue de son engagement avec ledit support de données (2) au cours d'une opération d'extraction.

5. Dispositif selon l'une quelconque des revendications précédentes :
dans lequel le moyen de libération de verrouillage (10) est adapté pour libérer automatiquement ledit moyen de verrouillage (5) lorsque ledit dispositif de maintien de support de données (3) est déplacé vers une position d'insertion / extraction de support de données, et pour verrouiller automatiquement ledit moyen de verrouillage (5) dans une position de verrouillage à la suite de l'insertion d'un support de données (2) dans le dispositif de maintien de support de données (3) et d'un déplacement subséquent du dispositif de maintien de support de données (3) depuis la position d'insertion / extraction vers une position de lecture.

6. Dispositif selon l'une quelconque des revendications précédentes, dans lequel ledit support de données (2) est une cartouche de disque et ledit lecteur est un lecteur de disques.
